# EUROPÄISCHE PATENTANMELDUNG

(11) **EP 4 491 067 A1**
(43) Veröffentlichungstag der Anmeldung: **15.01.2025**
(21) Anmeldenummer: 23185055.3
(22) Anmeldetag: 12.07.2023
(51) Int. Cl.: A47J 31/36

(54) **BRÜHEINHEIT, GETRÄNKEZUBEREITUNGSMASCHINE, SYSTEM UND VERFAHREN ZUR GETRÄNKEZUBEREITUNG**

(71) Anmelder: Delica AG, 5033 Buchs AG (CH)
(72) Erfinder: Affolterr, Roland, 5103 Möriken (CH); Thilla, Tim, 79576 Weil am Rhein (DE); Siefarth, Caroline, 4102 Binningen (CH); Wüthrich, Martina, 4417 Ziefen (CH); Kheiri, Pedram, 4332 Stein AG (CH)
(74) Vertreter: Hepp Wenger Ryffel AG

(57) **Zusammenfassung**

Brüheinheit (10) für eine Getränkezubereitungsmaschine umfassend wenigstens eine erste und eine zweite Brühkammerhälfte (11, 12) zum Ausbilden einer Brühkammer (13). Die beiden Brühkammerhälften (11, 12) sind relativ zueinander von einer offenen Position zum Einlegen einer Getränkesubstanz in eine geschlossene Position zum Ausbilden einer geschlossenen Brühkammer (13) mit einem Volumen (14) und zum Extrahieren der Getränkesubstanz verfahrbar. Wenigstens eine Brühkammerhälfte (11, 12) weist wenigstens einen Einstechdorn (20) zum Durchstechen einer die Getränkesubstanz umschliessende Hülle auf. Die erste und/oder zweite Brühkammerhälfte (11, 12) sind derart ausgestaltet, dass in der geschlossenen Position das Volumen (14) der geschlossenen Brühkammer (13) veränderbar ist. Zum Verändern des Volumens (14) ist ein mechanisch gekoppelter Motor (30) vorgesehen.

## Beschreibung

Die vorliegende Erfindung betrifft eine Brüheinheit, eine Getränkezubereitungsmaschine, ein System und ein Verfahren zur Getränkezubereitung gemäss den Oberbegriffen der unabhängigen Ansprüche.

Aus dem Stand der Technik sind verschiedene Brüheinheiten für Getränkezubereitungsmaschinen bekannt.

Beispielsweise offenbart WO 2023/036601 A1 eine Brüheinheit für eine Getränkezubereitungsmaschine, welche Kapseln in einer Brühkammer aufnimmt, und bei der nach dem Verschliessen der Brühkammer das Volumen der Brühkammern durch einen hydraulisch betätigten Anpresskolben reduziert wird.

Die WO 2020/233783 A1 offenbart eine Brühkammer für eine Brüheinheit, wobei eine Brühkammerhälfte einen hydraulisch verschiebbaren Gleiter aufweist, um einen Anpressdruck auf eine Dichtung zwischen den Brühkammerhälften zu verstärken.

WO 2022/018242 A1 offenbart eine Brühkammer mit einem verschiebbaren Wandteil, um eine Getränkesubstanz in fester Darreichungsform für die Extraktion aufzubrechen.

Nachteilig an solchen Brühkammern ist, dass die Betätigung der hydraulischen Bewegung nicht exakt gesteuert werden kann. Zusätzlich birgt die hydraulische Betätigung die Gefahr des Verkalkens und benötigt vergleichsweise viel Energie, insbesondere wenn die erhitzte Brühflüssigkeit verwendet wird. Ausserdem benötigt die hydraulische Ansteuerung ein separates Hydraulikvolumen, welches während oder nach der Extraktion entweder in die Kapsel einströmt oder in einen Restbehälter abgeführt werden muss.

Es ist Aufgabe der Erfindung, die Nachteile des Standes der Technik zu überwinden. Insbesondere soll eine Brüheinheit, eine Getränkezubereitungsmaschine, ein System und ein Verfahren zur Getränkezubereitung zur Verfügung gestellt werden, welche eine präzise Anpassung des Volumens der Brühkammer erlaubt.

Diese Aufgabe wird durch die in den unabhängigen Patentansprüchen definierten Vorrichtungen gelöst. Weitere Ausführungsformen ergeben sich aus den abhängigen Patentansprüchen.

Im Folgenden wird unter einer Brühkammer eine Kammer verstanden, welche eine Getränkesubstanz lose in Pulverform und/oder in Form eines oder mehrerer Pellets und/oder Presslinge, und/oder eingeschlossen in einer Hülle und/oder in einer Kapsel aufnimmt und zur Zubereitung eines Getränks von einer Flüssigkeit durchströmt werden kann.

Unter einer Getränkesubstanz wird eine Substanz verstanden, aus welcher unter Einwirkung einer Flüssigkeit ein Getränk erhalten werden kann. Beispielsweise kann eine Getränkesubstanz Teekräuter, Kaffeepulver, Trockensuppe, Kakaopulver usw. umfassen. Die Getränkesubstanz kann lose in Pulverform und/oder in Form eines oder mehrerer Pellets und/oder Presslinge, und/oder eingeschlossen in einer Hülle und/oder Kapsel vorliegen.

Unter Extrahieren wird hier verstanden, dass aus einer Getränkesubstanz unter Einwirkung einer Flüssigkeit ein Getränk erzeugt wird. Dabei können verschiedene Faktoren wie Temperatur, Druck oder Verweilzeit der Flüssigkeit einen Einfluss auf das herzustellende Getränk haben.

Eine erfindungsgemässe Brüheinheit für eine Getränkezubereitungsmaschine umfasst wenigstens eine erste Brühkammerhälfte und eine zweite Brühkammerhälfte zum Ausbilden einer Brühkammer. Die erste Brühkammerhälfte und die zweite Brühkammerhälfte sind relativ zueinander von einer offenen Position zum Einlegen einer Getränkesubstanz in eine geschlossene Position zum Ausbilden einer geschlossenen Brühkammer mit einem Volumen und zum Extrahieren der Getränkesubstanz verfahrbar. Die erste und/oder die zweite Brühkammerhälfte weist wenigstens einen Einstechdorn zum Durchstechen einer die Getränkesubstanz umschliessenden Hülle auf. Die erste Brühkammerhälfte und/oder die zweite Brühkammerhälfte sind derart ausgestaltet, dass in der geschlossenen Position das Volumen der geschlossenen Brühkammer veränderbar ist. Für das Verändern des Volumens ist ein mechanisch gekoppelter Motor vorgesehen.

Unter einer offenen Position wird hier und im Folgenden verstanden, dass die Brühkammerhälften derart voneinander beabstandet sind, dass eine Getränkesubstanz eingelegt werden kann. Die Brühkammer ist in der offen Position der Brühkammerhälften nicht zum Extrahieren der Getränkesubstanz geeignet. Entsprechend wird unter einer geschlossenen Position verstanden, dass eine zuvor eingelegte Getränkesubstanz eingeschlossen ist. Die Brühkammer ist in der geschlossenen Position der Brühkammerhälften zur Extraktion der Getränkesubstanz bereit.

Durch die Anwesenheit von Einstechdornen kann eine in einer Hülle eingeschlossene Getränkesubstanz für die Getränkezubereitung verwendet werden. Einerseits erlaubt dies für den Anwender eine einfache Dosierung, andererseits wird die Brühkammer somit nicht durch Rückstände der Getränkesubstanz verschmutzt. Ein Reinigen der Brühkammer bzw. der Brühkammerhälften kann somit wesentlich reduziert werden. Ein Einstechdorn kann als Hohlkanüle ausgestaltet sein, durch deren Bohrung ein Extraktionsfluid in die Hülle eingebracht oder das zubereitete Getränk aus der Hülle abgeführt wird. Ebenso ist es aber auch denkbar, dass der Einstechdorn lediglich eine Öffnung in der Hülle bereitstellt, und die Zuführung des Fluids in die Hülle bzw. das Abführen aus der Hülle aussen entlang des Einstechdorns erfolgt.

Durch die Möglichkeit des Veränderns des Volumens der Brühkammer kann das Volumen exakt auf die für die optimale Extraktion erforderliche Grösse bzw. Volumen der Getränkesubstanz angepasst werden. Beispielsweise kann somit ein Ausdehnen einer Portionskapsel erlaubt werden. Ebenso kann auch das Volumen einer Portionskapsel reduziert werden, um eine korrekte Extraktion beispielsweise bei einer Portionskapsel mit einer reduzierten Menge an Kaffeepulver zu gewährleisten. Ebenso kann eine Getränkesubstanz, welche in Form eines oder mehrerer Presslinge vorliegt, aufgebrochen und/oder aufgelockert werden. Ausserdem kann durch eine Volumenreduktion nach der Extraktion die verbleibende Getränkesubstanz ausgepresst werden, beispielsweise um ein Nachtropfen zu verhindern. Unter einer Veränderung des Volumens wird explizit eine Veränderung, welche lediglich aufgrund einer plastischen und/oder elastischen Deformation eines Dichtungselementes erfolgt, nicht verstanden. Das Volumen der geschlossenen Brühkammer kann ausgehend von einem voreingestellten Extraktionsvolumen um wenigstens 3%, bevorzugt um wenigstens 5%, besonders bevorzugt um wenigstens 7%, veränderbar sein. Dabei gilt als voreingestelltes Extraktionsvolumen dasjenige Volumen, welches für eine optimale Extraktion üblicherweise vorgesehen ist.

Die Verwendung eines mechanisch gekoppelten Motors erlaubt eine direkte Reaktion einer Motoransteuerung auf das Volumen der Brühkammer und somit eine genaue Einstellung des gewünschten Volumens.

Der mechanisch gekoppelte Motor kann einen Elektromotor umfassen. Üblicherweise wird die Brüheinheit in einer elektrisch betriebenen Getränkezubereitungsmaschine eingesetzt. Entsprechend wird durch die Verwendung eines Elektromotors die Veränderung des Volumens vereinfacht. Ausserdem erlaubt ein Elektromotor eine exakte Ansteuerung und auch eine kontrollierte Veränderung des Volumens. Ebenso kann mit einem Elektromotor eine Bewegung in beide Richtungen angetrieben werden, wobei ein Richtungswechsel jederzeit möglich ist. Das Volumen der Brühkammer kann sowohl reduziert als auch vergrössert werden.

Die erste Brühkammerhälfte und/oder die zweite Brühkammerhälfte kann zweiteilig ausgestaltet sein und ein äusseres Teil und ein inneres Teil aufweisen, wobei das äussere Teil und das innere Teil relativ zueinander verschiebbar sind. Durch eine solche Ausgestaltung einer Brühkammerhälfte kann einfach das Volumen der geschlossenen Brühkammer verändert werden. Die Brühkammer kann bei einer solchen Volumenänderung weiterhin geschlossen bleiben, sodass keine Getränkesubstanz und keine Flüssigkeit aus der Brühkammer austritt. Ebenso kann aber auch die Brühkammer leicht geöffnet werden, beispielsweise um Restwasser aus der Brühkammer ausführen zu können. Ein solches Öffnen der Brühkammer kann auch während des Brühprozesses erfolgen, beispielsweise um Spülwasser, insbesondere zum Konditionieren der Getränkesubstanz, vor der eigentlichen Getränkezubereitung aus der Brühkammer abzulassen. Die Bewegung des äusseren und des inneren Teils der Brühkammerhälfte kann unabhängig voneinander erfolgen.

Das äussere Teil kann einen Durchgang, insbesondere mit einem hohlzylindrisch ausgestalteten Bereich, aufweisen, in welchem das innere Teil dichtend verschiebbar gelagert ist. Dabei wird unter einem hohlzylindrisch ausgestalteten Bereich nicht bloss ein kreiszylindrisch ausgestalteter Bereich verstanden, sondern jeder Bereich, welcher durch eine Verschiebung einer geschlossenen ebenen Kurve entlang einer geraden oder gebogenen Strecke gebildet wird. Das Volumen kann durch Verschiebung des inneren Teils gegenüber dem äusseren Teil verändert werden. Durch die dichtende Lagerung des inneren Teils im äusseren Teil kann bei der Veränderung des Volumens beispielsweise der Druck in der Brühkammer variiert werden.

Der Motor mit einer allfälligen Übersetzung kann derart ausgebildet sein, dass das innere Teil mit einer Kraft im Bereich von 0.1-3.0 N/mm², vorzugsweise im Bereich von 0.4-2.0 N/mm², bevorzugt im Bereich von 0.8-1.2 N/mm² bewegt werden kann. Abhängig von der Anwendung kann die Kraft unterschiedlich dimensioniert werden. Soll beispielsweise das Volumen einer Kapsel, insbesondere einer Aluminiumkapsel, vor oder nach deren Extraktion reduziert werden, muss die Kraft so gross bemessen sein, dass die Kapsel und insbesondere die Hülle oder der Kapselkörper deformiert werden kann. Selbstverständlich ist die hierfür notwendige Kraft nicht nur abhängig vom Material der Kapsel, sondern insgesamt von der Ausgestaltung der Kapsel sowie vom effektiven Einwirkungsort der Kraft auf die Kapsel. Soll aber lediglich während der Extraktion das Volumen der Brühkammer vergrössert werden, um der Getränkesubstanz mehr Raum zur Verfügung zu stellen, kann die Kraft für die Volumenänderung kleiner dimensioniert werden. Vorzugsweise ist der Motor entkoppelt von der Schliessbewegung der Brühkammerhälften. Entsprechend muss der Motor nicht die gesamte für das dichte Verschliessen der Brühkammer benötigte Kraft aufbringen. Ausserdem kann der Bewegungsweg des Motors klein gehalten werden, da nicht die gesamte Schliessbewegung vom Motor verrichtet werden muss. Wenn die Schliessbewegung der Brühkammerhälften klassisch über die Betätigung eines Hebels erfolgt und lediglich die Volumenänderung motorisch erfolgt, hat der Benutzer das Gefühl des direkten Einflusses auf den Brühprozess. Es ist auch denkbar, dass der Benutzer beim Schliessen einen Grossteil der Schliessbewegung ausführt und lediglich ein letzter Teilbereich motorisch verschlossen wird. Somit kann über denselben Motorantrieb der letzte Bereich der Schliessbewegung und/oder ein erster Teilbereich der Öffnungsbewegung motorisch angetrieben erfolgen. Beispielsweise kann ein Spalt zwischen den beiden Brühkammerhälften bewusst offengelassen oder erzeugt werden, um Rest- oder Spülwasser aus der Brühkammer abführen zu können.

Das innere Teil kann einen Einlass in die Brühkammer zum Einleiten einer Extraktionsflüssigkeit, insbesondere wenigstens einen Einstechdorn in Form eines Injektors, insbesondere zum Durchstechen einer Hülle und zum Einleiten der Extraktionsflüssigkeit in eine Kapsel, aufweisen. Durch die Anordnung des Einlasses am inneren Teil kann nicht nur das Volumen verändert werden, sondern es kann auch ein Abstand des Einlasses von einer in der Brühkammer angeordneten Getränkesubstanz verändert werden. Insbesondere bei einer Ausgestaltung des Einlasses mit einem oder mehreren Einstechdornen kann gezielt der Zeitpunkt des Einstechens in eine Kapsel und/oder das Entfernen der Einstechdorne oder Perforationsnadeln aus der Kapsel präzise gesteuert werden.

Das Volumen der geschlossenen Brühkammer kann ein voreingestelltes Extraktionsvolumen im Bereich von 7'000 mm³ bis 94'000 mm³, vorzugsweise von 10'500 mm³ bis 70'000 mm³, besonders bevorzugt 14'000 mm³ bis 47'000 mm³, aufweisen. Ausgehend von diesem voreingestellten Extraktionsvolumen kann das Volumen der geschlossenen Brühkammer in einem Bereich von 30% bis 300%, vorzugsweise von 40% bis 200%, besonders bevorzugt von 50% bis 150%, des voreingestellten Extraktionsvolumens einstellbar sein. Dabei gilt als voreingestelltes Extraktionsvolumen dasjenige Volumen, welches für eine optimale Extraktion üblicherweise vorgesehen ist. Entsprechend ist das voreingestellte Extraktionsvolumen bei einer Extraktion von Kaffee auf eine Menge von Kaffeepulver im Bereich 3 g bis 40 g, vorzugsweise 4 g bis 30 g, besonders bevorzugt 5 g bis 20 g ausgelegt.

Die erste Brühkammerhälfte und/oder die zweite Brühkammerhälfte können wenigstens eine Einspritzdüse zum Einleiten einer Spülflüssigkeit zum Besprühen und/oder Benetzen der Getränkesubstanz und/oder zum Spülen der Brühkammer aufweisen. Mit einer Einspritzdüse kann beispielsweise das Volumen der Brühkammer vor oder nach der Extraktion zur Reinigungszwecken gespült werden. Ebenfalls kann dadurch die Brühkammer vor der Extraktion vorgewärmt werden, so dass eine nachfolgende Extraktion einer Getränkesubstanz und das daraus bereitgestellte Getränk bereits von Anfang an die gewünschte Temperatur aufweisen. Es ist jedoch auch möglich, eine in der Brühkammer angeordnete Getränkesubstanz zu benetzen, um die Qualität einer nachfolgenden Extraktion zu verbessern. Ebenso können die physikalischen Eigenschaften einer Kapselhülle durch das Besprühen und/oder Benetzen beeinflusst werden. Beispielsweise können Kunststoffkapseln durch das Besprühen mit heissem Wasser erweicht werden, so dass sich diese bei einer nachfolgenden Extraktion ausdehnen können. Ebenso kann aber auch eine Hülle um die Getränkesubstanz durch das Besprühen aufgeweicht werden, so dass bei einer Reduktion des Volumens beispielsweise ein in der Hülle eingeschlossener Getränkesubstanz-Pressling aufgebrochen und/oder aufgelockert werden kann.

Die Spülflüssigkeit muss sich nicht von der Flüssigkeit zur Extraktion der Getränkesubstanz unterscheiden. Dies hat den Vorteil, dass somit kein spezieller Tank für die Spülflüssigkeit in einer Getränkezubereitungsmaschine vorgesehen werden muss. Selbstverständlich ist es auch denkbar, dass sich die Spülflüssigkeit von der Extraktionsflüssigkeit unterscheidet und beispielsweise von einem anderen Tank gefördert wird. Dabei wird vorzugsweise berücksichtigt, dass die Extraktionsflüssigkeit nicht mit der Spülflüssigkeit kontaminiert wird.

In einer Zuleitung zur Einspritzdüse kann ein Einspritzventil angeordnet sein. Ein solches Einspritzventil erlaubt ein gezieltes Öffnen, so dass der genaue Zeitpunkt des Einbringens der Spülflüssigkeit gesteuert werden kann. Ebenso kann dadurch beispielsweise die Menge der Spülflüssigkeit genau bestimmt werden.

Das Einspritzventil kann zwischen dem inneren Teil und dem äusseren Teil ausgebildet sein und durch die relative Position zwischen innerem Teil und äusserem Teil ansteuerbar sein. Es wird dadurch eine einfache Steuerung des Ventils durch den Motor ermöglicht. Insbesondere kann auf eine teures Magnetventil verzichtet werden.

Die Einspritzdüse kann durch den Einlass in die Brühkammer gebildet sein. Somit kann eine einfache Konstruktion realisiert werden.

Die Einspritzdüse kann als Spaltdüse zwischen dem äusseren Teil und dem inneren Teil ausgebildet sein. Hierdurch muss keine separate Düse ausgebildet werden. Gleichzeitig verhindert eine Spaltdüse zwischen innerem und äusserem Teil, dass sich Rückstände der Getränkesubstanz im Spalt zwischen innerem und äusserem Teil anlagern können.

Die Brühkammer kann einen Auslass zum Ableiten eines aus der Getränkesubstanz extrahierten Getränkes und eine Öffnung zum Ableiten einer Restflüssigkeit aufweisen. Die Öffnung kann separat vom Auslass ausgebildet sein.

Unter einer Restflüssigkeit wird hier und im Folgenden jede Flüssigkeit verstanden, welche nicht als Getränk vorgesehen ist. Beispielsweise eine Flüssigkeit, welche zum Spülen der Brühkammer und/oder zum Besprühen und/oder Benetzen der Hülle der Getränkesubstanz verwendet wird. Ebenso wird auch eine LeckageFlüssigkeit als Restflüssigkeit verstanden, also ein Anteil der Extraktionsflüssigkeit, welcher beispielsweise durch die Hülle der Getränkesubstanz austritt oder durch einen von einem Einstechdorn gebildeten Durchgang durch die Hülle austritt.

Durch Ausgestaltung einer separaten Öffnung kann die Restflüssigkeit einfach abgeführt werden, ohne dass diese durch den Auslass fliesst. Eine Verunreinigung des zubereiteten Getränks kann einfach vermieden werden. Es ist jedoch auch denkbar, dass die Öffnung durch den Auslass selbst gebildet wird. Eine Trennung vom zubereiteten Getränk kann dann ausserhalb der Brühkammer beispielsweise durch einen separaten Auslass insbesondere mit Ventil erfolgen. Ebenso ist es denkbar, dass anstelle einer explizit ausgebildeten Öffnung die beiden Brühkammerhälften in eine Position verfahren werden, in welcher diese nicht dichtend ineinandergreifen. Die Restflüssigkeit wird dann durch einen Spalt zwischen den Brühkammerhälften abgeführt.

Die Öffnung kann bei bestimmungsgemässem Gebrauch im Bereich einer tiefsten Stelle der Brühkammer angeordnet sein. Eine solche Anordnung ermöglicht ein komplettes Abführen einer Restflüssigkeit aus der Brühkammer.

Die Öffnung kann auch bei bestimmungsgemässem Gebrauch im oberen Bereich der Brühkammer, insbesondere im höchsten Punkt der Brühkammer, angeordnet sein. Bei einer solchen Anordnung kann die Öffnung auch zum Ab- und/oder Zuführen von Luft in/aus der Brühkammer dienen. Beispielsweise erleichtert eine solche Öffnung das Trennen der beiden Brühkammerhälften, da ein Unterdruck vermieden werden kann. Andererseits erlaubt eine solche Anordnung auch ein Abführen der Luft aus der Brühkammer, welche ansonsten zu einer unkontrollierten Extraktion führen kann. Die Öffnung kann durch ein Magnetventil bei Bedarf geöffnet und/oder verschlossen werden. Ebenso ist es aber auch denkbar, dass die Öffnung bei einer Expansion der Kapsel oder einer Reduktion des Brühkammervolumens durch die Kapsel selbst verschlossen wird.

Bei einer Expansion der Kapsel und/oder einer Reduktion des Brühkammervolumens kann eine in der Brühkammer vorhandene Restflüssigkeit durch diese Öffnung oder beim Öffnen der Brühkammer erfolgen. Bei der Verwendung eines ansteuerbaren Ventils kann durch diese Öffnung auch ein erhöhter Druck in der Brühkammer abgebaut werden, welcher beispielsweise gegen eine Verriegelung der Brühkammer drückt und diese blockiert. Das Öffnen der Brühkammer kann somit vereinfacht werden. Es versteht sich von selbst, dass sowohl eine Öffnung im Bereich einer tiefsten Stelle der Brühkammer als auch eine Öffnung im oberen Bereich der Brühkammer angeordnet sein können, wobei die genannten Vorteile kombiniert werden.

Die Brühkammer kann ein Sicherheitsventil zum Öffnen bei Überdruck in der Brühkammer aufweisen. Somit wird ein unkontrolliertes Austreten von Extraktions-, Spül- und/oder Restflüssigkeit bei Überdruck verhindert. Das Sicherheitsventil kann dabei auf einen Druck zwischen 20 bar und 25 bar ausgelegt sein. Sobald der Druck in der Brühkammer diesen Druck übersteigt, öffnet sich das Sicherheitsventil und erlaubt ein Entweichen des für den Überdruck verantwortlichen Fluids. Vorzugsweise öffnet sich das Sicherheitsventil in einem Bereich, welcher nicht für einen Benutzer zugänglich ist.

Das Sicherheitsventil kann durch eine Dichtung zwischen den beiden Brühkammerhälften realisiert sein. Entsprechend wird kein weiteres Bauteil benötigt. Lediglich die Dichtung muss derart ausgestaltet sein, dass diese die Funktion eines Sicherheitsventils aufweist. Beispielsweise weist die Dichtung hierzu eine nach innen gerichtete Dichtlippe auf, welche bei Überschreiten des voreingestellten Druckes nach aussen gestülpt wird und einen Spalt zwischen den beiden Brühkammerhälften freigibt.

Eine erfindungsgemässe Getränkezubereitungsmaschine umfasst eine Brüheinheit wie vorgängig beschrieben.

Ein erfindungsgemässes System zur Getränkezubereitung umfasst eine Kapsel enthaltend eine Getränkesubstanz und eine Getränkezubereitungsmaschine wie vorgängig beschrieben, wobei insbesondere bei einer Veränderung des Volumens der Brühkammer eine Form der Kapsel veränderbar ist.

Ein erfindungsgemässes Verfahren zum Zubereiten eines Getränks mit einer Getränkezubereitungsmaschine, insbesondere wie vorgängig beschrieben, umfasst wenigstens die Schritte:
- Einbringen einer von einer Hülle umschlossenen Getränkesubstanz in eine Brühkammer,
- Verschliessen der Brühkammer und Ausbilden eines Volumens,
- Extrahieren eines Getränks aus der Getränkesubstanz durch Durchstechen der die Getränkesubstanz umschliessenden Hülle und Einleiten einer Extraktionsflüssigkeit in die Hülle und Ableiten der Extraktionsflüssigkeit aus der Hülle und aus der Brühkammer,
- Verändern des Volumens der verschlossenen Brühkammer vor und/oder während und/oder nach dem Extrahieren,
wobei die Veränderung des Volumens durch einen mechanisch gekoppelten Motor erfolgt.

Durch das Verändern des Volumens der Brühkammer kann das Volumen exakt auf die für die optimale Extraktion erforderliche Grösse bzw. Volumen der Getränkesubstanz angepasst werden. Beispielsweise kann somit ein Ausdehnen einer Portionskapsel erlaubt werden. Ebenso kann auch das Volumen einer Portionskapsel reduziert werden, um eine korrekte Extraktion beispielsweise bei einer Portionskapsel mit einer reduzierten Menge an Kaffeepulver zu gewährleisten. Ebenso kann eine Getränkesubstanz, welche in Form eines oder mehrerer Presslinge vorliegt, aufgebrochen und aufgelockert werden. Ausserdem kann durch eine Volumenreduktion nach der Extraktion die verbleibende Getränkesubstanz ausgepresst werden, beispielsweise um ein Nachtropfen zu verhindert.

Durch das Einbringen der Getränkesubstanz in einer die Getränkesubstanz umschliessenden Hülle wird ermöglicht, dass einerseits beim Öffnen der Brühkammer die gesamte Getränkesubstanz aus der Brühkammer entfernt werden kann. Eine Reinigung der Brühkammer wird somit für den Anwender wesentlich vereinfacht. Anderseits kann somit die Getränkesubstanz in verschlossenen Portionsverpackungen eingebracht werden. Die Getränkesubstanz kann in der Hülle sauerstoffdicht und/oder aromadicht verschlossen sein, was eine Lagerhaltung über eine längere Zeit ermöglicht.

Durch das Durchstechen einer Hülle kann die Extraktion innerhalb der Hülle erfolgen, was wiederum den Reinigungsaufwand reduziert. Die Brühkammer selbst muss nicht mit dem zubereiteten Getränk in Kontakt kommen. Somit lässt sich auch die Gefahr einer Kreuzkontamination bei einer aufeinanderfolgenden Extraktion unterschiedlicher Getränkesubstanzen verringern. Ausserdem kann die Getränkesubstanz somit von einer aroma- und/oder sauerstoffdichten Hülle umschlossen sein.

Die Verwendung eines mechanisch gekoppelten Motors zur Veränderung des Volumens erlaubt eine direkte Reaktion einer Motoransteuerung auf das Volumen der Brühkammer. Es wird eine exakte Anpassung des Volumens ermöglicht.

Das Volumen der geschlossenen Brühkammer kann reduziert werden. Somit kann eine Getränkesubstanz, welche als Pressling vorliegt, aufgebrochen und mechanisch aufgelockert werden, um eine verbesserte Extraktion überhaupt erst zu ermöglichen. Ebenso ist es aber denkbar, dass das Volumen der geschlossenen Brühkammer vergrössert wird, beispielsweise um einem Anschwellen der Getränkesubstanz bei deren Kontakt mit dem Extraktionsfluid Rechnung zu tragen. Es ist auch denkbar, dass das Volumen der geschlossenen Brühkammer erst reduziert und anschliessend vergrössert wird. Ebenso kann auch erst eine Expansion des Volumens erfolgen, und das Volumen anschliessend reduziert werden. Ausserdem können mehrfache Reduktions- und Expansionszyklen gefahren werden.

Das Volumen der geschlossenen Brühkammer kann ein voreingestelltes Extraktionsvolumen im Bereich von 7'000 mm³ bis 94'000 mm³, vorzugsweise von 10'500 mm³ bis 70'000 mm³, besonders bevorzugt 14'000 mm³ bis 47'000 mm³, aufweisen. Ausgehend von diesem voreingestellten Extraktionsvolumen kann das Volumen der geschlossenen Brühkammer in einem Bereich von 30% bis 300%, vorzugsweise von 40% bis 200%, besonders bevorzugt von 50% bis 150%, des voreingestellten Extraktionsvolumens veränderbar sein. Dabei gilt als voreingestelltes Extraktionsvolumen dasjenige Volumen, welches für eine optimale Extraktion üblicherweise vorgesehen ist. Entsprechend ist das voreingestellte Extraktionsvolumen bei einer Extraktion von Kaffee auf eine Menge von Kaffeepulver im Bereich 3 g bis 40 g, vorzugsweise 4 g bis 30 g, besonders bevorzugt 5 g bis 20 g ausgelegt.

Vor dem Verändern des Volumens der geschlossenen Brühkammer kann die Hülle der in der Brühkammer eingebrachte Getränkesubstanz mit einer Spülflüssigkeit besprüht und/oder benetzt werden. Beispielsweise kann damit die Brühkammer bereits auf eine Betriebstemperatur vorgewärmt werden. Ausserdem können die physikalischen Eigenschaften der Hülle beeinflusst werden. Beispielsweise kann eine Kunststoffhülle durch Erwärmen aufgeweicht werden, so dass sie sich bei einer anschliessenden Extraktion an das Volumen der Brühkammer anpasst. Ebenso kann die aufgeweichte Hülle der Kapsel aber auch einfacher deformiert werden, sodass beispielsweise das Kapselvolumen, also der Raum in welchem die Getränkesubstanz eingeschlossen ist, einfach reduziert oder durch einen Innendruck in der Hülle expandiert werden kann. Ebenso kann eine Hülle aus einem biologisch abbaubaren Material unter Einwirkung des Besprühens/Benetzens aufgeweichte werden, so dass diese flexibel und dehnbar wird. Entsprechend kann bei einer Reduktion des Volumens ein in der Hülle eingeschlossener Pressling aufgebrochen werden, was zu einer zufriedenstellenden Getränkezubereitung nötig ist.

Die zum Besprühen oder Benetzen verwendete Spülflüssigkeit kann vor der Extraktion der Getränkesubstanz aus der Brühkammer abgeführt werden, beispielsweise durch eine Öffnung wie vorgängig beschrieben. Entsprechend kann ein Vermischen dieser Flüssigkeit mit dem zubereiteten Getränk verhindert werden.

Das Besprühen und/oder Benetzen kann durch eine Einspritzdüse, insbesondere durch eine Spaltdüse zwischen einem äussern Teil und einem darin relativ verschiebbar gelagerten inneren Teil, erfolgen. Je nach Ausgestaltung der Düse, kann diese die eingespritzte Spülflüssigkeit fein vernebelt oder als Flüssigkeitsstahl abgeben. Bei einem feinen Vernebeln wird nur wenig Spülflüssigkeit benötigt, um die Hülle zu besprühen und/oder zu benetzen. Durch die Ausgestaltung als Spaltdüse zwischen zwei sich beweglichen Teilen kann eine Verkalkung einfach verhindert werden. Ausserdem kann dadurch sichergestellt werden, dass Verschmutzungen, welche sich zwischen den Teilen anlagern, ausgespült werden.

Für das Besprühen und/oder Benetzen kann ein Einspritzventil durch den Motor angesteuert werden. Durch eine Ansteuerung des Einspritzventils durch den Motor kann auf eine separate Steuerung für das Ventil verzichtet werden. Ausserdem kann das Ventil als günstiges mechanisches Ventil ausgebildet werden. Ebenso kann auf ein Magnetventil verzichtet werden. Entsprechend ist eine günstige Herstellung möglich.

Anhand von Figuren, welche lediglich Ausführungsbeispiele darstellen, wird die Erfindung im Folgenden näher erläutert. Es zeigen:
- Figur 1:: eine schematische Darstellung einer erfindungsgemässen Getränkezubereitungsmaschine,
- Figur 2:: eine schematische Darstellung einer erfindungsgemässen Brüheinheit,
- Figur 3:: eine schematische Darstellung einer ersten Brühkammerhälfte einer erfindungsgemässen Brüheinheit,
- Figur 4:: eine schematische Darstellung der Brühkammerhälfte aus Figur 3 mit einem inneren Teil in einer anderen Position.

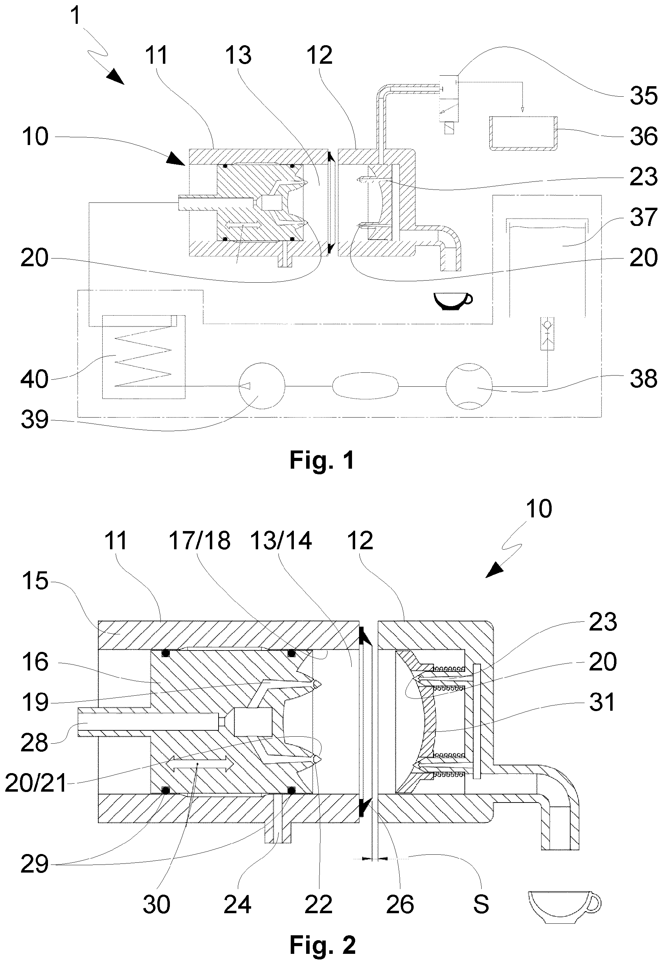

Figur 1 zeigt in einer schematischen Darstellung eine erfindungsgemässe Getränkezubereitungsmaschine 1 mit einer ersten Ausführungsform einer Brüheinheit 10. In bekannter Weise weist die Getränkezubereitungsmaschine 1 einen Wassertank 37, einen Durchflussmesser 38, eine Pumpe 39, einen Thermoblock 40 und einen Restbehälter 36 auf.

Zur Zubereitung eines Getränks wird eine Getränkesubstanz mit einer die Getränkesubstanz umschliessenden Hülle, beispielsweise als Portionenkapsel, in eine Brühkammer 13 eingebracht, welche durch eine erste Brühkammerhälfte 11 und ein zweite Brühkammerhälfte 12 gebildet wird. Die beiden Brühkammerhälften 11, 12 sind hierzu relativ zueinander verschiebbar gelagert, sodass diese von einer offenen Position, bei der die Getränkesubstanz eingebracht werden kann, in eine verschlossene Position zur Ausbildung einer geschlossenen Brühkammer 13 verfahren werden können. Die Brüheinheit 10 ist in der gezeigten Darstellung nicht ganz geschlossen. Zwischen den beiden Brühkammerhälften 11, 12 ist ein Spalt S (siehe Figur 2) erkennbar.

In der geschlossenen Position wird die Hülle der in der Brühkammer 13 eingeschlossenen Getränkesubstanz durch Einstechdorne 20, welche an beiden Brühkammerhälften 11, 12 ausgebildet sind, durchbohrt. Wasser wird vom Wassertank 37 über einen optionalen Durchflussmesser 38 mittels einer Pumpe 39 unter Druck durch einen Thermoblock 40 in die Brühkammer 13 gepumpt. Das Wasser, welches im Thermoblock 40 auf die zur Zubereitung des entsprechenden Getränks erforderliche Temperatur erhitzt oder abgekühlt wurde, durchströmt die Getränkesubstanz in der Brühkammer 13 und wird durch einen Auslass 23 beispielsweise in eine Tasse ausgegeben. Restwasser oder Leckagewasser, welches nicht durch die Getränkesubstanz zum Auslass 23 geführt wird, kann durch einen separaten Ausgang beispielsweise über ein Ventil 35 einem Restbehälter 36 zugeführt werden.

Figur 2 zeigt eine schematische Darstellung einer erfindungsgemässen Brüheinheit 10. Die Brüheinheit 10 weist wiederum eine erste und eine zweite Brühkammerhälfte 11, 12 auf. Die erste Brühkammerhälfte 11 weist ein äusseres Teil 15 und ein darin verschiebbar gelagertes inneres Teil 16 auf. Am äusseren Teil 15 ist an seiner der zweiten Brühkammerhälfte 12 zugewandten Seite eine Dichtung 26 angeordnet, welche ein dichtes Verschliessen der beiden Brühkammerhälften 11, 12 und somit das Ausbilden einer geschlossenen Brühkammer 13 mit einem Volumen 14 ermöglicht. In der gezeigten Darstellung ist die Brühkammer 13 nicht geschlossen, zwischen den beiden Brühkammerhälften 11, 12 ist trotz der Dichtung 26 weiterhin ein Spalt S ausgebildet. Selbstverständlich kann die Dichtung 26 auch an der zweiten Brühkammerhälfte 12 angeordnet sein. Die Dichtung 26 kann bei der geschlossenen Brühkammer 13 durch ihre Ausgestaltung mit nach innen gerichteter Lippe gleichzeitig die Funktion eines Sicherheitsventils übernehmen. Sobald der Druck innerhalb der Brühkammer 13 einen vorgegebenen Wert, üblicherweise zwischen 20 bar und 25 bar, übersteigt, wird die Lippe der Dichtung nach aussen gestülpt, so dass der Überdruck aus der Brühkammer 13 entweichen kann.

Das innere Teil 16 der ersten Brühkammerhälfte 11 ist in einem Durchgang 17 des äusseren Teils 15 verschiebbar gelagert. Hierzu weist das äussere Teil 15 einen hohlzylindrischen Bereich 18 im Durchgang auf, in dem das komplementär ausgebildete innere Teil 16 angeordnet ist. Die Verschiebung zwischen äusserem und innerem Teil 15, 16 erfolgt durch einen Motor, welcher in der Darstellung lediglich durch einen Pfeil 30 dargestellt ist. Um eine Leckage zwischen dem äusseren und dem inneren Teil 15, 16 zu verhindern, sind zwei Dichtungen 29, beispielweise je ein O-Ring, vorgesehen. Es versteht sich von selbst, dass auch nur eine Dichtung oder mehr als zwei Dichtungen vorhanden sein können. Das relativ zum äusseren Teil 15 verschiebbar angeordnete innere Teil 16 weist eine Zuleitung 28 für eine Extraktionsflüssigkeit, meist Wasser mit vorbestimmter Temperatur, auf. Die Zuleitung 28 mündet in einen Einlass 19 zur Brühkammer 13. In der dargestellten Ausführungsform endet der Einlass 19 in einem oder mehreren Einstechdornen 20, so dass diese gleichzeitig als Injektoren 21 zum Einspritzen der Extraktionsflüssigkeit durch die Hülle direkt in die Getränkesubstanz dienen. Ebenso kann der Einlass 19 aber auch an der Basis des Einstechdorns 20 in die Brühkammer 13 münden. Die Extraktionsflüssigkeit wird dann in die Brühkammer 13 geleitet und dort ihren Weg durch die vom Einstechdorn 20 aufgestochene Hülle entlang des Einstechdorns 20 in die Getränkesubstanz finden.

Auch die zweite Brühkammerhälfte 12 weist einen oder mehrere Einstechdorne 20 auf. Diese sind wiederum als Hohlkanülen dargestellt, so dass diese einen Auslass 23 aus der Brühkammer 13 für das zubereitete Getränk bilden. Des Weiteren weist die zweite Brühkammerhälfte 12 einen Auswerfer 31 auf, welcher die Getränkesubstanz nach erfolgter Extraktion und nach dem Öffnen der Brühkammer 13 von den Einstechdornen 20 schiebt. Je nach Art der zu extrahierenden Getränkesubstanz und deren umschliessend Hülle, kann die zweite Brühkammerhälfte 12 auch einen anderen Auslass 23 aufweisen. Beispielsweise kann die zweite Brühkammerhälfte 12 eine Reliefplatte aufweisen, welche mit Auslassöffnungen 23 versehen ist. Eine Reliefplatte kann beispielsweise bei einer Deckelfolie einer unter Druck stehenden Kapsel zur Ausbildung einer Vielzahl von Rissen dienen, so dass das zubereitete Getränk aus der Kapsel ausfliessen kann. Der Auswerfer 31 wird in diesem Fall auch anders ausgebildet sein.

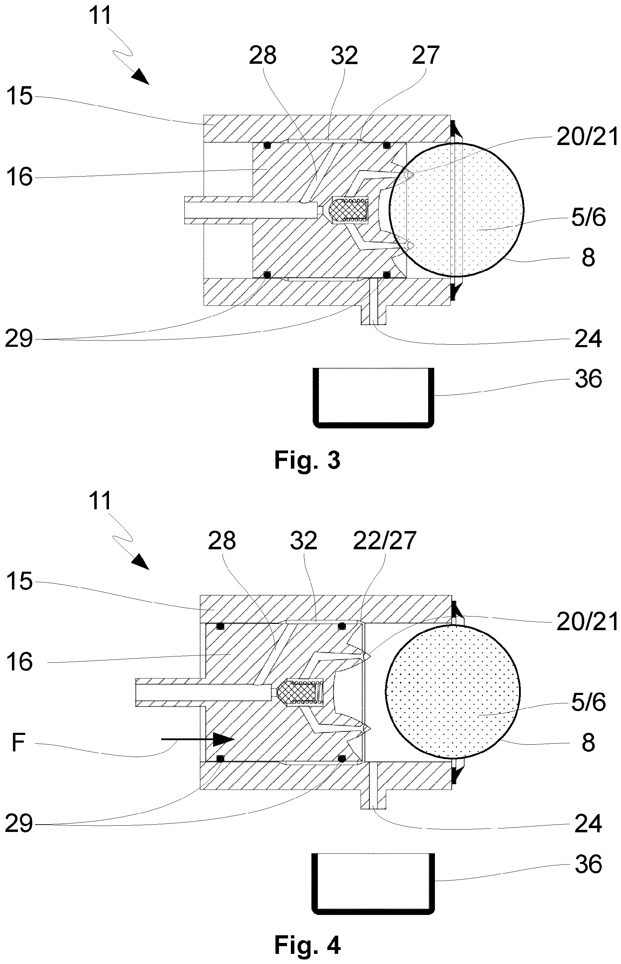

Für die Zubereitung eines Getränks kann es nötig sein, dass die Hülle der Getränkesubstanz vor der Extraktion konditioniert wird. Beispielsweise kann die Hülle bei Verwendung einer Kunststoffkapsel durch Wärme erweicht werden. Die Hülle und allenfalls auch die in der Hülle eingeschlossene Getränkesubstanz kann nun deformiert werden kann. Dies ist insbesondere bei Verwendung einer kompaktierten Getränkesubstanz, beispielsweise bei einem Pressling, nötig, um die Getränkesubstanz auflockern zu können. Hierzu weist in der dargestellten Ausführungsform die erste Brühkammerhälfte 11 an ihren Einstechdornen 20 Einspritzdüsen 22 auf. Die in der Brühkammer 13 eingebrachte Getränkesubstanz kann somit mit einer Spülflüssigkeit, beispielsweise heissem Wasser, besprüht und/oder benetzt werden, bevor der eigentliche Extraktionsvorgang beginnt. Entsprechend wird in dieser Konfiguration das innere Teil 16 in der dargestellten Ausführungsform vom Motor 30 nach links bewegt werden, so dass die Einstechdorne 20 die Hülle der Getränkesubstanz noch nicht penetrieren. Es versteht sich von selbst, dass die Verschiebung nach links des inneren Teils 16 schon vor oder während dem Verschliessen der Brühkammer 13 erfolgen kann. Ersichtlicherweise kann durch eine solche Verschiebung des inneren Teils 16 eine Öffnung 24 freigelegt werden, welche die Spülflüssigkeit zu einem Restbehälter 36 (siehe Figuren 3 und 4) ableitet. Alternativ kann aber auch die Spülflüssigkeit durch den Spalt S zwischen den beiden Brühkammerhälften 11, 12 abgeführt werden.

Nachdem die Hülle der Getränkesubstanz aufgeweicht wurde, kann das innere Teil 16 durch den Motorantrieb 30 wieder nach rechts (in der gezeigten Ausführungsform) bewegt werden, so dass die Hülle durchstochen und allenfalls ein Pressling aufgelockert werden kann. Die Extraktion der Getränkesubstanz kann dann in gewohnter Weise erfolgen. Nötigenfalls kann vor, während oder nach der Extraktion das innere Teil 16 wiederum nach links gefahren werden, um beispielsweise einer Expansion der Getränkesubstanz durch den Kontakt mit der Extraktionsflüssigkeit Rechnung zu tragen. Die Hülle der Getränkesubstanz wird sich aufgrund des in der Hülle herrschenden Innendrucks dem vergrösserten Volumen 14 der Brühkammer 13 anpassen. Es kann somit sichergestellt werden, dass die Extraktion jeweils in einem optimalen Extraktionsvolumen erfolgt.

Die Figuren 3 und 4 zeigen eine schematische Darstellung einer weiteren Ausführungsform einer ersten Brühkammerhälfte 11 einer erfindungsgemässen Brüheinheit. Eine Getränkesubstanz 6 eingeschlossen in einer Hülle 8, somit in Form einer Kapsel 5, ist ebenfalls dargestellt. Dabei ist ein inneres Teil 16 in Figur 3 in einer Position im äusseren Teil 15 angeordnet, wo die Öffnung 24 zum Restbehälter 36 verschlossen ist und die Einstechdorne 20 die Hülle 8 der Getränkesubstanz 6 durchbohrt haben. In Figur 4 ist die Öffnung 24 zum Restbehälter 36 vom inneren Teil 16 freigegeben, die Hülle 6 der Kapsel 5 noch unbeschädigt. In dieser Position der Figur 4 wird eine Einspritzdüse 22 zwischen dem inneren Teil 16 und dem äusseren Teil 15 ausgebildet, durch welche die Hülle 8 der Getränkesubstanz 6 besprüht und/oder benetzt werden kann. Hierzu ist eine Zuleitung 28 vorgesehen, welche zu einem Kanal 32 zwischen den beiden Dichtungen 29 zwischen äusserem und innerem Teil 15, 16 führt. Je nach Position des inneren Teils 16 relativ zum äusseren Teil 15 ist die Einspritzdüse 22 mit der Zuleitung 28 verbunden oder nicht. Es wird somit ein Einspritzventil 27 ausgebildet, welches abhängig von der Position des inneren Teils 16 geschaltet werden kann.

Wie bereits zu Figur 2 erläutert, wird für die eigentliche Extraktion das innere Teil 16 mit einer Kraft F in der Darstellung wieder nach rechts gemäss Figur 3 verschoben, so dass das Einspritzventil 27 und die Öffnung 24 zum Restbehälter 36 verschlossen sind. Bei dieser Verschiebung wird die Hülle 8 der Getränkesubstanz 6 durch die Einstechdorne 20 resp. die Injektoren 21 penetriert. Die Extraktion kann dann erfolgen. Selbstverständlich ist es auch denkbar, dass die Öffnung 24 und/oder das Einspritzventil 27 während der Extraktion geöffnet bleiben.

## Patentansprüche

1. Brüheinheit (10) für eine Getränkezubereitungsmaschine (1) umfassend wenigstens eine erste Brühkammerhälfte (11) und eine zweite Brühkammerhälfte (12) zum Ausbilden einer Brühkammer (13), wobei die erste Brühkammerhälfte (11) und die zweite Brühkammerhälfte (12) relativ zueinander von einer offenen Position zum Einlegen einer Getränkesubstanz (6) in eine geschlossene Position zum Ausbilden einer geschlossenen Brühkammer (13) mit einem Volumen (14) und zum Extrahieren der Getränkesubstanz (6) verfahrbar sind, wobei die erste Brühkammerhälfte (11) und/oder die zweite Brühkammerhälfte (12) wenigstens einen Einstechdorn (20) zum Durchstechen einer die Getränkesubstanz (6) umschliessende Hülle (8) aufweisen, wobei die erste Brühkammerhälfte (11) und/oder die zweite Brühkammerhälfte (12) derart ausgestaltet sind, dass in der geschlossenen Position das Volumen (14) der geschlossenen Brühkammer (13) veränderbar ist, wobei zum Verändern des Volumens (14) ein mechanisch gekoppelter Motor (30) vorgesehen ist.

2. Brüheinheit (10) nach Anspruch 1, wobei die erste Brühkammerhälfte (11) und/oder die zweite Brühkammerhälfte (12) zweiteilig ausgestaltet ist und ein äusseres Teil (15) und ein inneres Teil (16) aufweist, wobei das äussere Teil (15) und das innere Teil (16) relativ zueinander verschiebbar sind.

3. Brüheinheit (10) nach Anspruch 2, wobei das äussere Teil (15) einen Durchgang (17), insbesondere mit einem hohlzylindrisch ausgestalteten Bereich (18), aufweist, in welchem das innere Teil (16) dichtend verschiebbar gelagert ist.

4. Brüheinheit (10) nach einem Ansprüche 2 oder 3, wobei der Motor (30), insbesondere mit einer Übersetzung, derart ausgebildet ist, dass das innere Teil mit einer Kraft (F) im Bereich von 0.1-3.0 N/mm², vorzugsweise im Bereich von 0.4-2.0 N/mm², bevorzugt im Bereich von 0.8-1.2 N/mm², bewegt werden kann.

5. Brüheinheit (10) nach einem der Ansprüche 2 bis 4, wobei das innere Teil (16) einen Einlass (19) in die Brühkammer (13) zum Einleiten einer Extraktionsflüssigkeit, insbesondere wenigstens einen Einstechdorn (20) in Form eines Injektors (21) zum Durchstechen einer Hülle (8) und zum Einleiten der Extraktionsflüssigkeit in eine Kapsel (5), aufweist.

6. Brüheinheit (10) nach einem der vorhergehenden Ansprüche, wobei das Volumen (14) der geschlossenen Brühkammer (13) ausgehend von einem voreingestellten Extraktionsvolumen im Bereich von 30% bis 300%, vorzugsweise von 40% bis 200%, besonders bevorzugt von 50% bis 150%, einstellbar ist.

7. Brüheinheit (10) nach einem der vorhergehenden Ansprüche, wobei die erste Brühkammerhälfte (11) und/oder die zweite Brühkammerhälfte (12) wenigstens eine Einspritzdüse (21) zum Einleiten einer Spülflüssigkeit zum Besprühen und/oder Benetzen der Getränkesubstanz (6) und/oder zum Spülen der Brühkammer (13) aufweist.

8. Brüheinheit (10) nach Anspruch 7, wobei ein Einspritzventil (27) in einer Zuleitung (28) zur Einspritzdüse (21) angeordnet ist.

9. Brüheinheit (10) nach Anspruch 2 und 8, wobei das Einspritzventil (27) zwischen dem inneren Teil (16) und dem äusseren Teil (15) ausgebildet ist und durch die relative Position zwischen innerem Teil (16) und äusserem Teil (15) ansteuerbar ist.

10. Brüheinheit (10) nach Anspruch 2 und einem der Ansprüche 7 bis 9, wobei die Einspritzdüse (22) als Spaltdüse zwischen dem äusseren Teil (15) und dem inneren Teil (16) ausgebildet ist.

11. Brüheinheit (10) nach einem der vorhergehenden Ansprüche, wobei die Brühkammer (13) einen Auslass (23) zum Ableiten eines Getränkes und eine Öffnung (24) zum Ableiten einer Restflüssigkeit aufweist.

12. Getränkezubereitungsmaschine (1) umfassend eine Brüheinheit (10) nach einem der vorhergehenden Ansprüche.

13. System zur Getränkezubereitung umfassend eine Kapsel (5) enthaltend eine Getränkesubstanz (6) und eine Getränkezubereitungsmaschine (1) nach Anspruch 15, wobei insbesondere bei einer Veränderung des Volumens (14) der Brühkammer (10) eine Form der Kapsel (5) veränderbar ist.

14. Verfahren zum Zubereiten eines Getränks mit einer Getränkezubereitungsmaschine (1), insbesondere nach Anspruch 12, umfassend wenigstens die Schritte,
Einbringen einer von einer Hülle (8) umschlossenen Getränkesubstanz (6) in eine Brühkammer (13),
Verschliessen der Brühkammer (13) und Ausbilden eines Volumens (14),
Extrahieren eines Getränks aus der Getränkesubstanz (6) durch Durchstechen der die Getränkesubstanz (6) umschliessenden Hülle (8) und Einleiten einer Extraktionsflüssigkeit in die Hülle (8) und Ableiten der Extraktionsflüssigkeit aus der Hülle (8) und aus der Brühkammer (13),
Verändern des Volumens (14) der geschlossenen Brühkammer (10) vor und/oder während und/oder nach dem Extrahieren, **dadurch gekennzeichnet, dass** die Veränderung des Volumens (14) durch einen mechanisch gekoppelten Motor (30) erfolgt.

15. Verfahren nach Anspruch 14, wobei das Volumen (14) der geschlossenen Brühkammer (10) reduziert und/oder vergrössert wird.

16. Verfahren nach Anspruch 14 oder 15, wobei vor dem Verändern des Volumens (14) der geschlossenen Brühkammer (10) die Hülle (8) der in der Brühkammer (10) eingebrachte Getränkesubstanz (6) mit einer Spülflüssigkeit besprüht und/oder benetzt wird.

17. Verfahren nach Anspruch 16, wobei die zum Besprühen und/oder Benetzen verwendete Spülflüssigkeit vor der Extraktion der Getränkesubstanz aus der Brühkammer abgeführt wird.

18. Verfahren nach Anspruch 17, wobei zum Abführen der Spülflüssigkeit die beiden Brühkammerhälften (11, 12) derart auseinander gefahren werden, dass sich ein Spalt (S) zwischen den beiden Brühkammerhälften (11, 12) ausbildet.

19. Verfahren nach Anspruch 2 und einem der Ansprüche 16 bis 18, wobei das Besprühen und/oder Benetzen durch eine Einspritzdüse (22), insbesondere durch eine Spaltdüse zwischen einem äussern Teil (15) und einem darin relativ verschiebbar gelagerten inneren Teil (16), erfolgt.

20. Verfahren nach einem der Ansprüche 16 bis 19, wobei für das Besprühen und/oder Benetzen ein Einspritzventil (27) durch den Motor (30) angesteuert wird.
